# EUROPÄISCHE PATENTANMELDUNG

(11) **EP 1 792 812 A2**
(43) Veröffentlichungstag der Anmeldung: **06.06.2007**
(21) Anmeldenummer: 06020354.4
(22) Anmeldetag: 28.09.2006
(51) Int. Cl.: B62D 65/02

(54) **Bearbeitungsstation und Verfahren zur Fertigung von Karosserien**

(30) Priorität: 02.12.2005 DE 102005057602
(71) Anmelder: Volkswagen Aktiengesellschaft, 38436 Wolfsburg (DE)
(72) Erfinder: Rössinger, Markus, 38106 Braunschweig (DE)

(57) **Zusammenfassung**

Die Erfindung betrifft eine Bearbeitungsstation und ein Verfahrene zur Fertigung von Karosserien (9) unterschiedlichen Typs mit einer Spannstation (20) mit austauschbaren Spannrahmen, zumindest einem Spannrahmenmagazin (6), in welches die austauschbaren Spannrahmen bei Nichtgebrauch abgelegt und aus welchen die austauschbaren Spannrahmen bei Gebrauch entnommen werden sowie mit zumindest einem Roboter als Transportmittel für die austauschbaren Spannrahmen. Die austauschbaren Spannrahmen, insbesondere die Spannrahmen für die Karosserieseitenteile, sind dabei in mehrere, separierbare Segmentspannrahmen (3,4) unterteilt, wobei zur Umstellurig auf einen anderen Karosserietyp jeweils ein Segmentspannrahmen mit einem Robotern von der Spannstation zum Spannrahmenmagazin transportiert, dort abgelegt, ein Segmentspannrahmen eines anderen Typs aus dem Spannrahmenmagazin entnommen und dieser zur Spannstation transportiert wird.

## Beschreibung

Die Erfindung betrifft eine Bearbeitungsstation für Karosserien unterschiedlichen Typs auf einer Fertigungslinie gemäß des Oberbegriffs des Anspruchs 1 und ein Verfahren zur Fertigung von Karosserien unterschiedlichen Typs auf einer Fertigungslinie gemäß des Oberbegriffs des Anspruchs 9.

In derzeitigen Fertigungslinien zum Zusammenbau von Karosserien wird die geometrische Ausrichtung der einzelnen Karosserieteile zueinander und zu den Bearbeitungs- und Schweißrobotern mittels starrer und schwerer Spannrahmen realisiert, die gleichzeitig eine stabile Halterung der leicht verformbaren Karosserieteile bilden.

Wird die Karosserie vorfixiert in die Fügestation bzw. Geometrieschweißanlage der Fertigungslinie gefahren, werden die Spannrahmen an die Karosserie herangefahren und dienen der genauen Fixierung und Halterung der einzelnen Karosserieteile.

Aus der DE 28 10 822 C2 ist eine Vorrichtung zum Zusammenschweißen von Karosseriebauteilen für Kraftfahrzeuge bekannt, bei denen das lose Zusammenfügen der einzelnen Karosserieteile und das anschließende genaue Positionieren und Geometrieschweißen in jeweils eigenen Stationen erfolgt. Der Transport von einer Station zur nächsten erfolgt über eine Transportbahn. Die lose mit anderen Karosserieteilen zusammengefügten Seitenteile der Karosserie werden mit aus einer Bereitschaftsstellung in eine Arbeitsstellung und zurück, senkrecht zur Transportbahn verfahrbaren Spannrahmen, an welchen Positioniereinrichtungen angebracht sind, in Position gebracht und gespannt. Die Positioniereinrichtungen sind dabei an die geometrische Form der Karosserieteile angepasst. Die Spannrahmen sind an in Transportrichtung verlaufenden Schienen schwenkbar aufgehängt. Bei der Umstellung auf einen anderen Karosserietyp müssen die Spannrahmen ausgetauscht oder die Positioniereinrichtungen angepasst werden. Zum Austausch der Spannrahmen gegen einen anderen Satz Spannrahmen, deren Positioniereinrichtung auf die geometrische Form eines anderen Karosserietyps abgestellt sind, werden diese an den Schienen verfahren, in Bereitschaftsstellung gebracht und ausgewechselt. Dabei ist der Wechsel von einem Karosserietyp auf den nächsten sehr aufwendig, unflexibel und mit einem hohen Platzbedarf verbunden.

In der DE 199 14 125 A1 wird ein Verfahren zur Fertigung von Fahrzeugen unterschiedlicher Fahrzeugmodelle auf einer Fertigungslinie und eine Fügestation offenbart, bei welchen bei einem Wechsel des Fahrzeugmodells innerhalb einer Fertigungslinie der Zeitaufwand minimiert und dabei gleichzeitig der Raumbedarf der Fertigungslinie reduziert wird. Unterschiedliche Fahrzeugmodelle durchlaufen dabei jeweils die gleichen Bearbeitungsstationen der Fertigungslinie. In der Fügestation werden die an einem Fahrzeugkörper vorfixierten Karosserieteile mit an Spannrahmen angeordneten Spannelementen gehaltert. Diese Spannrahmen sind mit Spannelementen zur exakten Ausrichtung und Halterung der Karosserieteile fahrzeugtypspezifisch bestückt. Die Spannrahmen sind auf Führungen angeordnet auf denen sie von einer Arbeitsstellung in eine Ruhestellung und umgekehrt gebracht werden können. Bei einem Wechsel des Fahrzeugmodells muss die Fügestation an das neue Fahrzeugmodell angepasst werden. Dazu werden die Spannrahmen während eines Arbeitstaktes ausgetauscht. Der Spannrahmen wird in die Ruhestellung gebracht, von der Führung ausgekoppelt und mit einem Aufzug in ein Magazin verbracht, in dem unterschiedliche Spannrahmen abgelegt sind. Gleichzeitig wird über einen weiteren Aufzug ein neuer Spannrahmen vom Magazin abgeholt und in die Führung eingekoppelt. Der Wechsel der Spannrahmen ist jedoch durch deren hohes Gewicht und großen Raumbedarf immer noch sehr aufwendig, unflexibel und mit Taktzeitverlusten verbunden.

In anderen Fertigungslinien werden die einzelnen Karosserieteile der Fügestation mit den Spannrahmen zugeführt, wie beispielsweise in der WO 95/19868 beschrieben. Nachteilig ist hier ebenfalls das hohe Gewicht und der große Raumbedarf der Spannrahmen, welche eine robuste Handhabung erfordern.

In modernen Anlagen bringen Fördersysteme die Bodengruppe und die Seitenteile zu einer Karosseriegerippe-Anlage. Dort greifen Handlingroboter die Seitenteile der Karosserie mit ihren als Seitenteilgreifern ausgebildeten Spannrahmen und positionieren diese direkt in der Geometriestation. Dann werden die Spannrahmen miteinander verriegelt und die Karosserieteile verschweißt. Diese Anlagen haben zwar eine hohe Flexibilität, allerdings können durch die von den Robotern gehaltenen Spannrahmen nur beschränkt Kräfte zum Fügen der Karosserieteile aufgebracht werden.

Aufgabe der Erfindung ist es daher eine flexible Fügestation, die eine einfache, platz- und zeitsparende Umstellung des Karosserietyps und ein Zusammenfügen von Karosseriebauteilen mit geringen Bautoleranzen ermöglicht, zur Verfügung zu stellen.

Die Lösung der Aufgabe gelingt mit einer Bearbeitungsstation gemäß Anspruch 1 und einem Verfahren gemäß Anspruch 9. Vorteilhafte Ausgestaltungen sind in den jeweiligen abhängigen Ansprüchen ausgeführt.

Die erfindungsgemäße Bearbeitungsstation zur Fertigung von Karosserien unterschiedlichen Typs auf einer Fertigungslinie umfasst zumindest eine Spannstation mit austauschbaren Spannrahmen, zumindest ein Spannrahmenmagazin, in welches die austauschbaren Spannrahmen bei Nichtgebrauch abgelegt und aus welchen die austauschbaren Spannrahmen bei Gebrauch entnommen werden sowie zumindest einen Roboter als Transportmittel, mit welchem die austauschbaren Spannrahmen vom Spannrahmenmagazin zur Spannstation und zurück bewegbar sind. An den Spannrahmen sind Positionier-, Halte und Einspänneinrichtungen für ein Karosserieteil eines bestimmten Typs befestigt. Die austauschbaren Spannrahmen, insbesondere die Spannrahmen für die Karosserieseitenteile, sind dabei in mehrere, separierbare Segmentspannrahmen unterteilt, so dass die Segmentspannrahmen einzeln und flexibel mittels zumindest eines Roboters austauschbar sind.

Beim erfindungsgemäßen Verfahren zur Fertigung von Karosserien unterschiedlichen Typs auf einer Fertigungslinie wird zum Austausch der Spannrahmen zumindest ein in einzelne Segmentspannrahmen separierbarer Spannrahmen der Spannstation ausgetauscht, wobei jeweils ein Segmentspannrahmen mit einem Robotern von der Spannstation zum Spannrahmenmagazin transportiert, dort abgelegt, ein Segmentspannrahmen eines anderen Typs aus dem Spannrahmenmagazin entnommen und dieser zur Spannstation transportiert wird.

Dabei kann zum einen durch die Aufteilung der Spannrahmen in Segmentspannrahmen das Gewicht in Größenordnungen von Robotertraglasten reduziert werden so dass aufwendige starre Transporteinheiten entfallen können und zum anderen gleichzeitig das Schließen der Spannrahmen mit Antriebseinheiten der Spannstation erfolgen, so dass die erforderlichen Spannkräfte auf die Karosserie aufgebracht werden können.

Die erfindungsgemäße Bearbeitungsstation und das erfindungsgemäße Verfahren sind zur Fertigung von Karosserien unterschiedlichen Typs auf einer Fertigungslinie, insbesondere zur Fertigung von Fahrzeugen unterschiedlichen Typs, geeignet, wobei die unterschiedlichen Typen jeweils die gleiche Bearbeitungsstation durchlaufen und eine Umstellung der Fertigung auf einen anderen Typ durch zumindest den Austausch der Spannrahmen mittels Roboter erfolgt. Insbesondere werden in der Spannstation der Bearbeitungsstation einzelne, vorher lose zusammengefügten Karosserieteile mit den Segmentspannrahmen gehaltert, zentriert und gespannt und anschließend verschweißt.

In einer vorteilhaften Ausführung der Erfindung ist jedem Segmentspannrahmen für einen bestimmten Typ einer Karosserie ein Spannrahmenmagazin zugeordnet, in welchem mehrere austauschbare Segmentspannrahmen für Karosserieteile unterschiedlichen Typs angeordnet oder anordenbar sind. Dadurch können mit einer der auszutauschenden Anzahl von Segmentspannrahmen entsprechenden Anzahl von Robotern die Segmentspannrahmen gleichzeitig und schnell ausgetauscht werden, so dass bei einer Umstellung der Fertigungslinie auf einen anderen Typ die Taktzeitverluste durch die Umstellung minimiert werden.

Vorzugsweise ist jedem Segmentspannrahmen für einen bestimmten Typ einer Karosserie ein Werkzeugmagazin zugeordnet ist, in welchem mehrere austauschbare Fügewerkzeuge, insbesondere Schweißwerkzeuge, für Karosserieteile unterschiedlichen Typs angeordnet oder anordenbar sind. Die Fügewerkzeuge können dann vorzugsweise mit den jeweiligen den entsprechenden Segmentspannrahmen zugeordneten Robotern ebenfalls gleichzeitig ausgetauscht werden.

In einer bevorzugten Ausführung der Erfindung weist die Spannstation Mittel zur Aufnahme für jeweils einen Segmentspannrahmen auf, so dass jeder Segmentspannrahmen separat in der Spannstation anordenbar ist, dabei werden die Segmentspannrahmen vorzugsweise ebenfalls von den Robotern in der Spannstation angeordnet und aus dieser entfernt. Für jeden Segmentspannrahmen sind dabei vorzugsweise entsprechende Einkoppelstellen, Halte- und Spannvorrichtungen an der Spannstation vorgesehen.

Die Mittel zur Aufnahme jeweils eines Segmentspannrahmens sind vorzugsweise mit Antriebseinheiten zum horizontalen Verschieben der Mittel zur Aufnahme eines Segmentspannrahmens verbunden, so dass jeweils ein in der Spannstation angeordneter Segmentspannrahmen in der Spannstation mit den Antriebseinheiten von einer Position zum Austausch in eine Position zur Verriegelung und umgekehrt verschoben werden kann.

In einer weiteren bevorzugten Ausführung der Erfindung sind die Antriebseinheiten der Segmentspannrahmen mit einer Steuereinheit verbunden, welche vorzugsweise eine synchrone Steuerung der Antriebseinheiten eines Segmentspannrahmens und bevorzugt eine synchrone Steuerung der Antriebseinheiten aller Segmentspannrahmen realisiert, so dass die Verschiebung der Segmentspannrahmen von einer Position zum Austausch in eine Position zur Verriegelung und umgekehrt synchron erfolgen kann.

Im folgenden wird die Erfindung anhand von Ausführungsbeispielen unabhängig von ihrer Zusammenfassung in den Patenansprüchen anhand von Zeichnungen ohne Beschränkung der Allgemeinheit genauer erläutert. Es zeigen
- Figur 1: eine schematische Übersicht einer Bearbeitungsstation
- Figur 2: eine schematische Seitenansicht einer Spannstation
- Figur 3: eine schematische Rückansicht einer Spannstation
- Figur 4: einen Spannrahmenantrieb

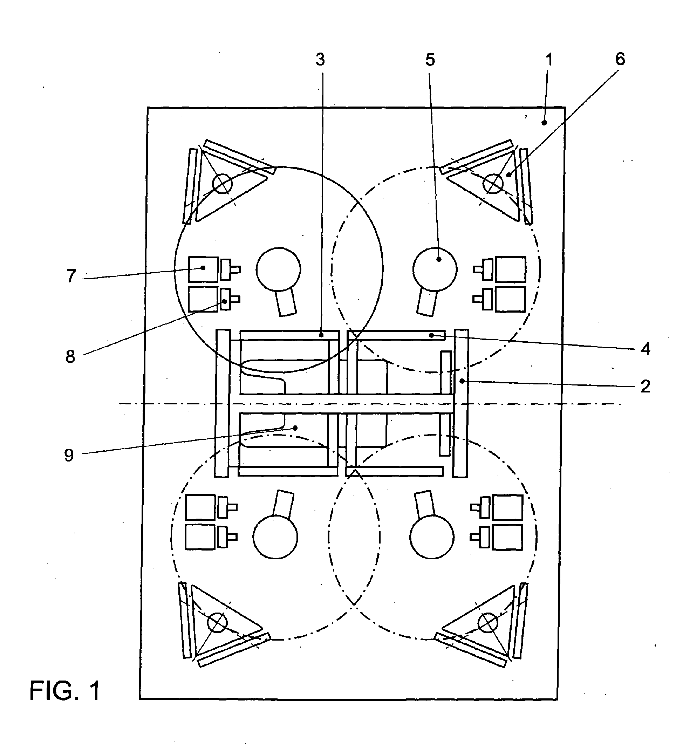

Figur 1 zeigt in schematischer Übersicht eine erfindungsgemäße Bearbeitungsstation in beispielhafter Ausführung als Geometrieschweißstation 1 einer Fertigungslinie für Karosserien unterschiedlichen Typs. Die Geometrieschweißstation 1 umfasst die aus einem Stahlbau bestehende Spannstation 2, zwei jeweils in einen Segmentspannrahmen vorn 3 und einen Segmentspannrahmen hinten 4 aufgeteilte Spannrahmen mit entsprechenden Spannern 26 für die Seitenteile der Karosserie 9, vier, den Segmentspannrahmen 3, 4 zugeordnete Roboter 5, jeweils vier, den Segmentspannrahmen 3, 4 zugeordnete drehbare Spannrahmenmagazine 6 mit Segmentspannrahmen für drei verschiedene Karosserietypen und Werkzeugmagazine 7 mit den jeweiligen Fügewerkzeugen 8.

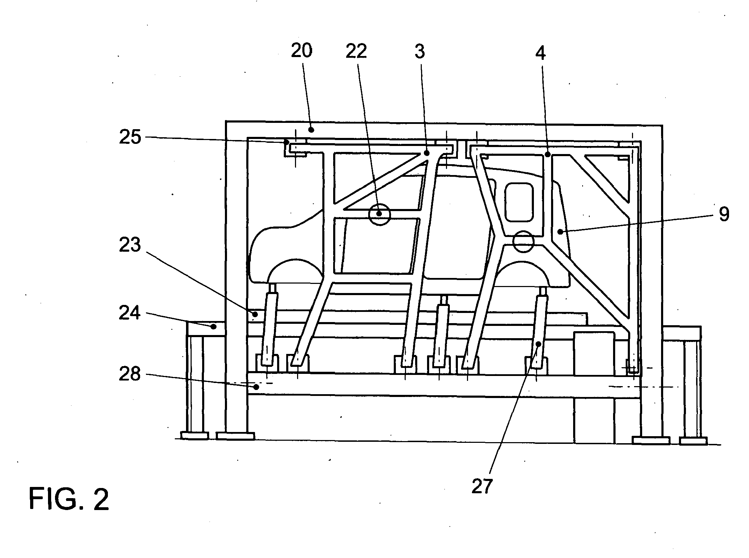

In Figur 2 ist eine Seitenansicht der Spannstation 20 schematisch dargestellt. Durch die Spannstation 20 verläuft die Rollbahn 24 zum Transport der Karosserien 9 zwischen den einzelnen Bearbeitungsstationen der Fertigungslinie. Beim Umstellen der Fertigung von einem Karosserietyp A auf einen Karosserietyp B, wird die geclipste Karosserie 9 vom Typ B, mittels der Rollbahn 24 mit einem Transportskid 23 in die Spannstation 20 der Geometrieschweißstation 1 gefördert. Während des Fördervorgangs greifen die vier Roboter 5 in das jeweilige automatische Wechselsystem 22 der Segmentspannrahmen vorn 3 und hinten 4 des zuvor gefertigten Typs A, heben diese aus den Spannrahmenaufnahmen 25 der Spannstation 20 und legen sie in den jeweils zugeordneten Spannrahmenmagazinen 6 ab, wobei die Spannrahmenmagazine 6 sich in der Position zur Aufnahme für die Segmentspannrahmen des Typ A befinden. Die Spannrahmenmagazine 6 drehen nun die Segmentspannrahmen 3, 4 des Typ B zu den Robotern 5. Die Roboter 5 entnehmen die Segmentspannrahmen 3, 4 des Typ B aus den Spannrahmenmagazinen 6 mit Hilfe der an den Segmentspannrahmen 3, 4 befestigten automatischen Wechselsysteme 22, mit welchen die Roboter 5 die Spannrahmen 3, 4 greifen, halten und zur Spannstation 20 transportieren können. Die Roboter 5 positionieren die Segmentspannrahmen 3, 4 in den Spannrahmenaufnahmen 25 der Spannstation 20 und docken anschließend ab.

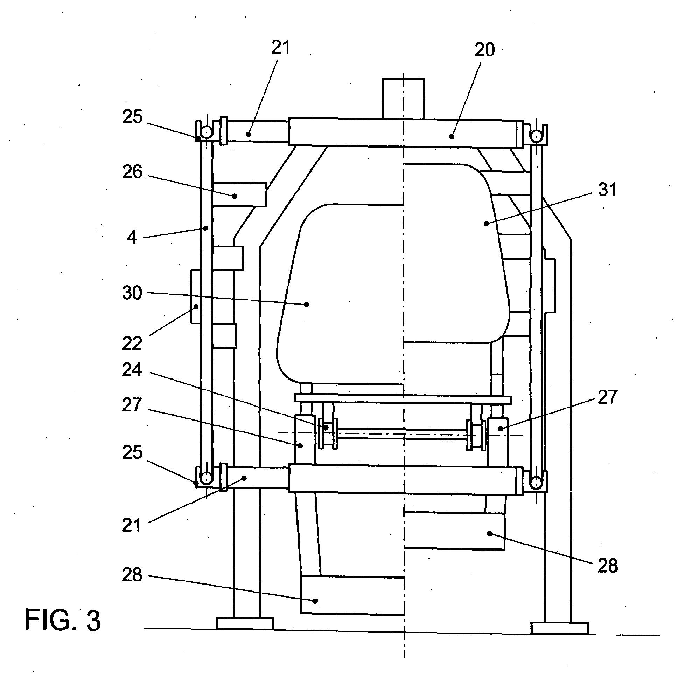

Während des Austauschs der Segmentspannrahmen 3, 4 wird die Karosserie 9 des Typ B durch Anheben des Unterbauspannrahmens 28 mit den Unterbauspannern 27 aus einer Förderstellung 30 von der Rollenbahn 24 in eine Arbeitsstellung 31 angehoben. Die Förderstellung 30 und die Arbeitsstellung 31 sind in der Figur 3 veranschaulicht. Der Karosserieunterbau wird durch die Unterbauspanner 27 in Geometrie gespannt.

Anschließend werden die Segmentspannrahmen 3, 4 des Typ B durch synchrones Verfahren der Antriebseinheiten 21 von einer Position zum Austausch, links dargestellt in Figur 3, in eine Position zur Verriegelung, rechts dargestellt in Figur 3, gebracht.

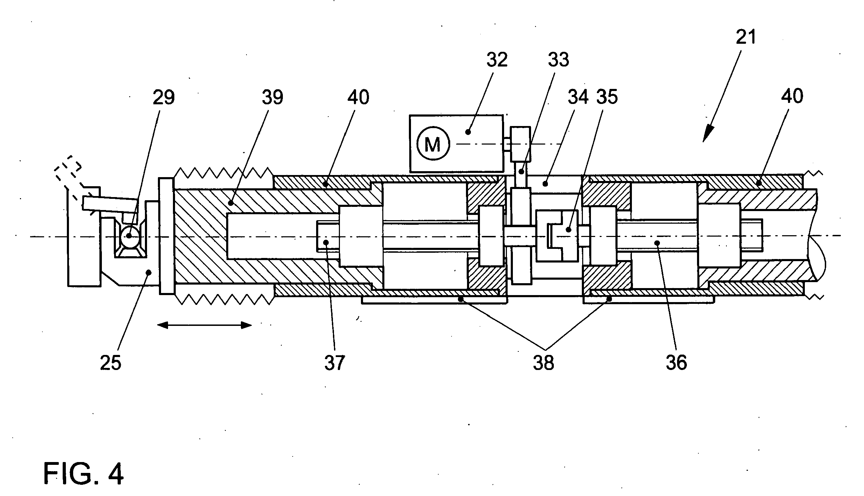

Die Antriebseinheiten 21 können dabei vorzugsweise, wie in Figur 4 näher dargestellt, als jeweils gekoppelte Antriebe für zwei sich gegenüberliegende Segmentspannrahmen vorn 3 bzw. hinten 4 ausgeführt werden. Jeder Segmentspannrahmen 3, 4 wird dabei mit mehreren Antriebseinheiten 21 bewegt, wobei die Motoren 32 der Antriebseinheiten 21 mittels an sich bekannter Steuerungstechnik synchron gesteuert werden. Die Antriebseinheiten 21 umfassen eine Kugelgewindespindel mit Linksgewinde 36 und eine Kugelgewindespindel mit einem Rechtsgewinde 37, welche über eine Kupplung 35 miteinander verbunden sind. Die gekuppelten Kugelgewindespindeln 36, 37 sind über einen Zahnriemen 33 mit dem Motor 32 und jeweils einer Pinole 39 verbunden. Die Pinolen 39 sind in den mit einem Verbindungsteil 34 miteinander verbundenen Gehäuseteilen 40 verschiebbar gelagert und die Gehäuseteile 40 mittels eines Arischraubflansches 38 an der Spannstation 20 befestigt. An den Enden der Pinolen 39 sind die Spannrahmenaufnahmen 25 befestigt, welche bei Betrieb des Motors 32 gleichzeitig in die jeweilige Position zum Austausch oder zur Verriegelung bewegt werden.

Sind die Segmentspannrahmen 3, 4 in die Position zur Verriegelung gebracht, werden die Seitenteile der Karosserie 9 anschließend mit den Zentrierstiften und Spannern 26 in Geometrie gespannt.

Während die Segmentspannrahmen 3, 4 verfahren und die Karosserie in Geometrie gespannt wird, können die Roboter 5 die entsprechend benötigten Fügewerkzeuge 8 aus den Werkzeugmagazinen 7 entnehmen und zur Spannstation transportieren. Ist die gesamte Karosserie in Geometrie gespannt führen die Roboter 5 die Geometrieschweißaufgaben mit den Fügewerkzeugen 8 an der Karosserie 9 aus.

Nach der Ausführung der Schweißaufgaben öffnen die Spanner 26, die Segmentspannrahmen 3, 4 des Typ B werden durch synchrones Verfahren der Antriebseinheiten 21 von der Position zur Verriegelung in die Position zum Austausch gebracht und die Karosserie 9 durch absenken des Unterspannrahmens 28 auf den Transportkid 23 der Rollenbahn 24 abgesetzt. Anschließend kann die geometriegeschweißte Karosserie 9 aus der Spannstation 20 der Geometrieschweißstation 1 gefördert und eine neu geclipste Karosserie 9 des gleichen oder eines anderen Typs kann eingefördert werden.

### Bezugszeichenliste

- 1: Geometrieschweißstation
- 2: Stahlbau Spannstation
- 3: Segmentspannrahmen vorn
- 4: Segmentspannrahmen hinten
- 5: Roboter
- 6: Spannrahmenmagazin
- 7: Werkzeugmagazin
- 8: Fügewerkzeug
- 9: Karosserie
- 20: Spannstation
- 21: Antriebseinheit
- 22: Wechselsystem
- 23: Transportskid
- 24: Rollenbahn
- 25: Spannrahmenaufnahme
- 26: Spanner
- 27: Unterbauspanner
- 28: Unterbauspannrahmen
- 29: Spannrahmenzentrierung
- 30: Förderstellung
- 31: Arbeitsstellung
- 32: Motor
- 33: Zahnriemen
- 34: Verbindungsteil
- 35: Kupplung
- 36: Kugelgewindespindel mit Linksgewinde
- 37: Kugelgewindespindel mit Rechtsgewinde
- 38: Anschraubflansch
- 39: Pinole
- 40: Gehäuseteil

## Patentansprüche

1. Bearbeitungsstation zur Fertigung von Karosserien (9) unterschiedlichen Typs auf einer Fertigungslinie zumindest umfassend eine Spannstation (20) mit austauschbaren Spannrahmen, welche Positionier-, Halte und Einspanneinrichtungen für ein Karosserieteil eines bestimmten Typs aufweisen, zumindest ein Spannrahmenmagazin (6), in welches die austauschbaren Spannrahmen bei Nichtgebrauch abgelegt und aus welchen die austauschbaren Spannrahmen bei Gebrauch entnommen werden sowie Transportmittel für die austauschbaren Spannrahmen, mit welchen die austauschbaren Spannrahmen vom Spannrahmenmagazin (6) zur Spannstation (20) und zurück bewegbar sind, **dadurch gekennzeichnet, dass** zumindest ein austauschbarer Spannrahmen mehrere separierbare Segmentspannrahmen (3, 4) umfasst und als Transportmittel für die separierten Segmentspannrahmen (3, 4) zumindest ein Roboter (5) vorgesehen ist.

2. Bearbeitungsstation nach Anspruch 1, **dadurch gekennzeichnet, dass** der austauschbare Spannrahmen für jeweils ein Karosserieseitenteil eines bestimmten Typs zwei austauschbare Segmentspannrahmen (3, 4) umfasst.

3. Bearbeitungsstation nach einem der vorhergehenden Ansprüche, **dadurch gekennzeichnet, dass** jedem Segmentspannrahmen (3, 4) für einen bestimmten Typ einer Karosserie ein Spannrahmenmagazin (6) zugeordnet ist, in welchem mehrere austauschbare Segmentspannrahmen (3, 4) für Karosserieteile unterschiedlichen Typs angeordnet oder anordenbar sind.

4. Bearbeitungsstation nach einem der vorhergehenden Ansprüche, **dadurch gekennzeichnet, dass** jedem Segmentspannrahmen (3, 4) für einen bestimmten Typ einer Karosserie ein Werkzeugmagazin (7) zugeordnet ist, in welchem mehrere austauschbare Schweißwerkzeuge (8) für Karosserieteile unterschiedlichen Typs angeordnet oder anordenbar sind.

5. Bearbeitungsstation nach Anspruch 4, **dadurch gekennzeichnet, dass** das als Transportmittel für die Schweißwerkzeuge (8) die Roboter (5) vorgesehen sind.

6. Bearbeitungsstation nach einem der vorhergehenden Ansprüche, **dadurch gekennzeichnet, dass** die Spannstation (20) Mittel zur Aufnahme (25) für jeweils einen Segmentspannrahmen (3, 4) aufweist.

7. Bearbeitungsstation nach Anspruch 6, **dadurch gekennzeichnet, dass** die Mittel zur Aufnahme (25) jeweils eines Segmentspannrahmens (3, 4) mit Antriebseinheiten (21) zum horizontalen Verschieben der Mittel zur Aufnahme (25) eines Segmentspannrahmens (3, 4) verbunden sind.

8. Bearbeitungsstation nach einem der vorhergehenden Ansprüche 2 bis 6, **dadurch gekennzeichnet, dass** die Antriebseinheiten (21) mit einer Steuereinheit verbunden sind.

9. Verfahren zur Fertigung von Karosserien unterschiedlichen Typs auf einer Fertigungslinie bei welchem in einer Spannstation Spannrahmen, welche Positionier-, Halte und Einspanneinrichtungen für ein Karosserieteil eines bestimmten Typs aufweisen, zur Umstellung der Fertigung auf eine Karosserie eines anderen Typs ausgetauscht werden, wobei die Spannrahmen bei Nichtgebrauch in zumindest einem Spannrahmenmagazin abgelegt und bei Gebrauch aus dem zumindest einen Spannrahmenmagazin entnommen werden, **dadurch gekennzeichnet, dass** zumindest ein in einzelne Segmentspannrahmen separierbarer Spannrahmen der Spannstation ausgetauscht wird, wobei jeweils ein Segmentspannrahmen mit einem Roboter von der Spannstation zum Spannrahmenmagazin transportiert, dort abgelegt, ein Segmentspannrahmen eines anderen Typs aus dem Spannrahmenmagazin entnommen und zur Spannstation transportiert wird.

10. Verfahren nach Anspruch 9, **dadurch gekennzeichnet, dass** in zwei Segmentspannrahmen unterteilte Spannrahmen der Karosserieseitenteile ausgetauscht werden.

11. Verfahren nach einem der vorhergehenden Ansprüche 9 oder 10, **dadurch gekennzeichnet, dass** jeweils ein Segmentspannrahmen mit jeweils einem diesem Segmentspannrahmen zugeordneten Roboter, vorzugsweise gleichzeitig mit weiteren Segmentspannrahmen, ausgetauscht wird.

12. Verfahren nach einem der vorhergehenden Ansprüche 9 bis 11, **dadurch gekennzeichnet, dass** mittels zumindest eines Roboters die Fügewerkzeuge für einen bestimmten Typ einer Karosserie in zumindest ein Werkzeugmagazin abgelegt und gegen Fügewerkzeuge für ein Karosserieteil eines anderen Typs ausgetauscht werden.

13. Verfahren nach Anspruch 12, **dadurch gekennzeichnet, dass** jeweils einem Segmentspannrahmen zugeordnete Fügewerkzeuge mit dem diesen Segmentspannrahmen zugeordneten Roboter ausgetauscht werden.

14. Verfahren nach einem der vorhergehenden Ansprüche 9 bis 13, **dadurch gekennzeichnet, dass** die Roboter die Segmentspannrahmen in Mittel zur Aufnahme der Segmentspannrahmen der Spannstation positionieren und von dort entnehmen.

15. Verfahren nach einem der vorhergehenden Ansprüche 9 bis 14, **dadurch gekennzeichnet, dass** jeweils ein Segmentspannrahmen in der Spannstation mit einer Antriebseinheit von einer Position zum Austausch in eine Position zur Verriegelung und umgekehrt verschoben wird.

16. Verfahren nach einem der vorhergehenden Ansprüche 9 bis 15, **dadurch gekennzeichnet, dass** die Antriebseinheiten der Segmentspannrahmen synchron gesteuert werden.

17. Verfahren nach einem der vorhergehenden Ansprüche 9 bis 16, **dadurch gekennzeichnet, dass** in der Spannstation einzelne, vorher lose zusammengefügten Karosserieteile mit den Segmentspannrahmen gehaltert, zentriert und gespannt und anschließend verschweißt werden.
